# EUROPEAN PATENT SPECIFICATION

(11) **EP 4 219 199 B1**
(45) Date of publication and mention of the grant of the patent: **25.03.2026**
(21) Application number: 22154077.6
(22) Date of filing: 28.01.2022
(51) Int. Cl.: B60H 1/00

(54) **A POWER SYSTEM FOR A TRANSPORT REFRIGERATION UNIT**
STROMSYSTEM FÜR EINE TRANSPORTKÜHLEINHEIT
SYSTÈME D'ALIMENTATION POUR UNE UNITÉ DE RÉFRIGÉRATION DE TRANSPORT

(43) Date of publication of application: 02.08.2023
(73) Proprietor: Carrier Corporation, Palm Beach Gardens, FL 33418 (US)
(72) Inventor: DUCHER, Gael, 76520 Franqueville Saint Pierre (FR); BEAUFRERE, Florian, 76520 Franqueville Saint Pierre (FR)
(74) Representative: Dehns

(56) References cited:
- EP-B1- 3 647 087
- US-A1- 2021 070 141
- US-B2- 10 353 410

## Description

The present invention relates to a power system for a transport refrigeration unit, and a method of powering a transport refrigeration unit.

Transport refrigeration units (TRUs) transport perishable or temperature-sensitive goods and consumables within logistics networks. TRUs generally regulate a monitored environment within a storage area, such as a container or trailer of a vehicle, where the goods are to be stored during transit. The monitored environment is regulated using a refrigeration system or the like, which in turn is powered by an energy source.

Typically, this energy source includes a generator driven by an engine (e.g. an engine of the TRU or an engine of the vehicle). Sometimes the TRU may also be powered by a battery unit that is charged using the generator. Accordingly, the TRU can be powered at times when the engine is off.

Whilst existing TRU systems are suitable for their intended purpose, a demand exists for improved TRU systems.

EP 3,647,087 discloses a method and system for predicting stored energy consumption of a Transport refrigeration unit. US 10,353,410 discloses geographic specific controlling of a transport refrigeration system.

Viewed from a first aspect of the present invention, there is provided a power system for a transport refrigeration unit of a vehicle, the system comprising: a battery unit configured to supply electrical power to a refrigeration system of the transport refrigeration unit; a generator configured to charge the battery unit; an engine configured to drive the generator; and a control system configured to: receive or determine a vehicle route from a current location of the vehicle to a destination of the vehicle; predict how a power level of the battery unit will change on the vehicle route; and control an operational state of the engine based on the vehicle route and the predicted power level.

The power system is configured to use a vehicle route and a predicted power level of the battery unit on the vehicle route to control operation of the engine. That is, the system may implement predictive control of the engine based on how the battery level is expected to change along the route.

The provision of a power system which is configured to control operation of the engine based on a vehicle route and a predicted power level removes the need for the system to be reactive, i.e. to just the power demand or charge level of the battery unit. As such, the engine may be switched to an operational state only when the vehicle route and predicted power level indicate that it is convenient to do so. For example, the engine may be switched to an operational state in order to facilitate charging of the battery unit when the vehicle route indicates that the vehicle will shortly be entering into a low emission zone or low noise zone in which the engine should not be operated. Additionally, or alternatively, since it is cheaper and more environmentally friendly to recharge the battery unit using a mains electric grid, the engine may be switched to a non-operational state shortly before reaching the final destination of the vehicle in order to allow the battery unit to discharge so that the battery unit is not unnecessarily charged using the engine. Accordingly, less fuel may be used to transport the refrigerated goods, and hence costs associated with transporting the refrigerated goods may be reduced.

The battery unit may be configured to receive charge from a mains electric grid, such as when the vehicle is stationary. That is, the battery unit may be capable of receiving charge from the electric grid when the vehicle reaches its destination. This may be cheaper than charging the battery unit using the generator if the battery unit has sufficient charge to power the refrigeration compartment from the current location to an end of the vehicle route, and hence the costs associated with transporting refrigerated goods may be reduced.

The generator may be configured to only charge the battery unit. That is, the generator may be configured to supply electrical power to only the battery unit.

By supplying electrical power generated by the generator to only the battery unit, the fuel used by the engine to drive the generator may be preserved, and hence the costs associated with transporting refrigerated goods may be reduced since, e.g. the generator does not need to supply electrical power to the refrigeration system of the transport refrigeration unit. Accordingly, the generator may be configured not to supply electrical power directly to the refrigeration system of the transport refrigeration unit.

Alternatively, the generator may be configured to supply electrical power to the refrigeration system in addition to supplying electrical power to the battery unit. In these embodiments, the control system may be configured to determine a power demand of the refrigeration system. When the power demand is greater than a predetermined threshold, the control system may be configured to switch the engine to an operational state, or maintain the engine in an operational state, so as to drive the generator to supply electrical power to the refrigeration system. Thus, the refrigeration system may be configured to receive electrical power from the generator alone.

When the power demand is less than the predetermined threshold and a power level of the battery unit indicates that the battery unit requires charging, the control system may be configured to switch the engine to an operational state, or maintain the engine in an operational state, so as to drive the generator to supply electrical power to both the refrigeration system and the battery unit. Accordingly, the generator may be configured to simultaneously provide electrical power to the refrigeration system and the battery unit.

When the power demand is less than the predetermined threshold and a power level of the battery unit indicates that the battery unit does not require charging, the control system may be configured to switch the engine to an non-operational state, or maintain the engine in a non-operational state, so as to supply electrical power to the refrigeration system from the battery unit alone. Thus, the refrigeration system may be configured to receive electrical power from the generator or from the battery unit depending on the power demand of the refrigeration system and a power level of the battery unit.

In other embodiments, when the power demand is greater than a maximum current output of the engine, the control system may be configured to switch the engine to an operational state, or maintain the engine in an operational state, and to supply electrical power to the refrigeration system from both the generator and the battery unit. Accordingly, the refrigeration system may be configured to simultaneously receive electrical power from the generator and from the battery unit.

The engine may be an engine of the transport refrigeration unit. That is, the engine may not be configured to provide motive force to the vehicle. In this way, control of the operational state of the engine based on the vehicle route and predicted power level may not be of detriment to the ability of the vehicle to transport refrigerated goods.

The control system may be configured to receive a vehicle route from a current location of the vehicle to a destination of the vehicle. For example, the route may be supplied from an external system. The control system may be configured to also receive the current location of the vehicle and/or the destination of the vehicle, e.g. together with the vehicle route from the external system.

Alternatively, the control system may be configured to determine a vehicle route from a current location of the vehicle to a destination of the vehicle. For example, the control system may be configured to receive or determine a current location of the vehicle, and may be configured to determine the vehicle route from the current location of the vehicle and a destination of the vehicle.

The control system may be configured to switch the engine between an operational state and a non-operational state based on the vehicle route and the predicted power level. When the engine is in an operational state, the control system may be configured to control a speed of the engine based on the vehicle route and the predicted power level.

The control system may be configured to control the operational state of the engine such that the power level of the battery unit is above a non-zero minimum-charge value from a start of the vehicle route to an end of the vehicle route. In this way, the power system may ensure that the battery unit always has electrical power to supply to the refrigeration system of the transport refrigeration unit.

The control system may be configured to control the operational state of the engine such that the power level of the battery unit will be below a first predetermined value when the vehicle reaches its destination. The first predetermined threshold value may be below 50%, below 45%, below 40%, below 35%, below 30%, below 25%, or below 20% of the capacity of the battery unit.

Since the battery unit can receive charge from an electric grid when the vehicle reaches its destination, the engine is desirably not operated close to the end of the vehicle route so as to allow the battery to discharge. In this way, fuel may be preserved and hence the cost of transporting the refrigerated goods may be reduced.

The control system may be configured to determine a first time at which to prevent further charging of the battery unit before the vehicle reaches its destination. The control system may be configured to determine the first time such that the power level of the battery unit will be below the first predetermined value when the vehicle reaches its destination. The control system may be configured to determine the first time such that the power level of the battery unit will be sufficient to power the refrigeration system of the transport refrigeration unit up until the vehicle reaches its destination. The control system may be configured to switch the engine to a non-operational state at the first time or to maintain the engine in a non-operational state at the first time.

Alternatively, if the power level of the battery unit will be insufficient to power the refrigeration system of the transport refrigeration unit up until the vehicle reaches its destination, the control system may be configured to switch the engine to an operational state or maintain the engine in an operational state only for the amount of time it takes to partially charge the battery unit.

The control system may be configured to determine that the route of the vehicle passes through a region in which the engine should not be operated. The region in which the engine should not be operated may be a low emission zone or a low noise zone.

The control system may be configured to control the operational state of the engine such that the power level of the battery unit will be above a second predetermined value when the vehicle enters the region in which the engine should not be operated. The second predetermined value may be above 50%, above 55%, above 60%, above 65%, above 70%, above 75%, above 80%, above 85%, above 90%, or above 95% of the capacity of the battery unit.

Even when a current power level of the battery unit indicates that the engine does not need to be operated, it may be desirable to charge the battery unit so that there is sufficient charge in the battery unit to power the refrigeration system of the transport refrigeration unit as the vehicle passes through a region in which the engine should not be operated. In this way, the vehicle may avoid the need to either operate the engine within the region or to deactivate the refrigeration system of the TRU.

The control system may be configured to determine a second time at which to control the operational state of the engine, i.e. in order to charge the battery unit before the vehicle enters the region in which the engine should not be operated. The control system may be configured to determine the second time such that the power level of the battery unit will be above the second predetermined value when the vehicle enters the region.

In particular, the control system may be configured to switch the engine to an operational state at the second time or to maintain the engine in an operational state at the second time.

The control system be configured to determine that the vehicle has entered a region in which the engine should not be operated, and to not operate the engine whilst the vehicle is within the region.

If the predicted power level indicates that the power level of the battery unit will become insufficient to power the refrigeration system whilst the vehicle is in the region, the control system may be configured to (temporarily) switch the engine to an operational state when the vehicle is in the region. Alternatively, if the predicted power level indicates that the power level of the battery unit will become insufficient to power the refrigeration system whilst the vehicle is in the region, the control system may be configured to switch the refrigeration system off when the vehicle is in the region,

The control system may be configured to (i) switch the engine to an operational state or (ii) to switch the refrigeration system off, if the predicted power level indicates that the power level of the battery unit will become insufficient to power the refrigeration system whilst the vehicle is in the region, based on a user setting.

The control system may be configured to determine a change in the vehicle route. The control system may be configured to change the speed of the engine based on the change in the vehicle route. For example, if the change in the vehicle route indicates that the vehicle will enter a region in which the engine should not be operated when it would not have before (or sooner than it would have), and the predicted power level indicates that the battery unit will not have sufficient charge while the vehicle is in the region, the control system may switch the engine to an operational state or maintain the engine in an operational state and, if the engine is at a reduced speed, the controller may increase the speed of the engine in order to facilitate faster charging of the battery unit.

The system may comprise a position determining system for determining the current location of the vehicle. The position determining system may be configured to determine a current location of the vehicle and may be configured to transmit the current location of the vehicle to the control system. The position determining system may be a GPS system.

The control system may be configured to control an operational state of the engine based on a current power level of the battery. For example, when the current power level falls below a low-battery threshold value, the control system may switch the engine to an operational state, and when the current power level exceeds a full-battery threshold value, the control system may switch the engine to a non-operational state.

The full-battery threshold value may be higher than the low-battery threshold value, but need not necessarily correspond to the maximum capacity of the battery. The low-battery threshold value may be below 50% of the battery capacity, and may be below 40% of the battery capacity. The full-battery capacity may be above 50% of the battery capacity, and may be above 75% of the battery capacity.

Viewed from a second aspect of the present invention, there is provided a transport refrigeration unit of a vehicle, comprising: a refrigeration system configured to cool a compartment of the vehicle; and a power system as described above.

Viewed from a third aspect of the present invention, there is provided a method of powering a transport refrigeration unit of a vehicle, wherein the transport refrigeration unit comprises a refrigeration system, a battery unit for powering the refrigeration system, a generator for charging the battery unit, and an engine for driving the generator, the method comprising: determining a vehicle route from a current location of the vehicle to a destination of the vehicle; predicting how a power level of the battery unit will change on the vehicle route; and controlling an operational state of the engine based on the vehicle route and the predicted power level.

The method uses a vehicle route and a predicted power level of the battery unit on the vehicle route to control operation of the engine. That is, the method may implement predictive control of the engine based on how the battery level is expected to change along the route.

The provision of a method that uses a vehicle route and a predicted power level to control the operation of the engine removes the need for the control system to be reactive, i.e. to just the power demand or charge level of the battery unit. As such, the engine may be switched to an operational state only when the vehicle route and predicted power level indicate that it is convenient to do so. For example, the engine may be switched to an operational state in order to facilitate charging of the battery unit when the vehicle route indicates that the vehicle will shortly be entering into a low emission zone or low noise zone in which the engine should not be operated. Additionally, or alternatively, since it is cheaper and more environmentally friendly to recharge the battery unit using a mains electric grid, the engine may be switched to a non-operational state shortly before reaching the final destination of the vehicle in order to allow the battery unit to discharge so that the battery unit is not unnecessarily charged using the engine. Accordingly, less fuel may be used to transport the refrigerated goods, and hence costs associated with transporting the refrigerated goods may be reduced.

The method may comprise supplying electrical power to the battery unit from a mains electric grid, such as when the vehicle is stationary. That is, the method may comprise supplying electrical power to the battery unit from the electric grid when the vehicle reaches its destination. This may be cheaper than charging the battery unit using the generator if the battery unit has sufficient charge to power the refrigeration compartment from the current location to an end of the vehicle route, and hence the costs associated with transporting refrigerated goods may be reduced.

The method may comprise charging the battery unit using only the generator. That is, the method may comprise supplying electrical power from the generator to only the battery unit.

By supplying electrical power generated by the generator to only the battery unit, the fuel used by the engine to drive the generator may be preserved, and hence the costs associated with transporting refrigerated goods may be reduced since, e.g. the generator does not need to supply electrical power to the refrigeration system of the transport refrigeration unit. Accordingly, the method may comprise not supplying electrical power directly from the generator to the refrigeration system of the transport refrigeration unit.

Alternatively, the method may comprise supplying electrical power to the refrigeration system from the generator in addition to supplying electrical power to the battery unit. In these embodiments, the method may comprise determining a power demand of the refrigeration system. When the power demand is greater than a predetermined threshold, the method may comprise switching the engine to an operational state, or maintaining the engine in an operational state, so as to drive the generator to supply electrical power to the refrigeration system. Thus, the method may comprise supplying electrical power to the refrigeration system from the generator alone.

When the power demand is less than the predetermined threshold and a power level of the battery unit indicates that the battery unit requires charging, the method may comprise switching the engine to an operational state, or maintaining the engine in an operational state, so as to drive the generator to supply electrical power to both the refrigeration system and the battery unit. Accordingly, the method may comprise simultaneously supplying electrical power from the generator to the refrigeration system and the battery unit.

When the power demand is less than the predetermined threshold and a power level of the battery unit indicates that the battery unit does not require charging, the method may comprise switching the engine to an non-operational state, or maintaining the engine in a non-operational state, so as to supply electrical power to the refrigeration system from the battery unit alone. Thus, the method may comprise supplying electrical power to the refrigeration system from the generator or from the battery unit depending on the power demand of the refrigeration system and a power level of the battery unit.

In other embodiments, when the power demand is greater than a maximum current output of the engine, the method may comprise switching the engine to an operational state, or maintaining the engine in an operational state, and supplying electrical power to the refrigeration system from both the generator and the battery unit. Accordingly, the method may comprise supplying electrical power to the refrigeration system from the generator and from the battery unit simultaneously.

The engine may be an engine of the transport refrigeration unit. Thus, the method may comprise not providing motive force to the vehicle. In this way, control of the operational state of the engine based on the vehicle route and predicted power level may not be of detriment to the ability of the vehicle to transport refrigerated goods.

The method may comprise receiving a vehicle route from a current location of the vehicle to a destination of the vehicle. For example, the route may be supplied from an external system. The method may comprise receiving the current location of the vehicle and/or the destination of the vehicle, e.g. together with the vehicle route from the external system.

Alternatively, the method may comprise determining a vehicle route from a current location of the vehicle to a destination of the vehicle. For example, the method may comprise receiving or determining a current location of the vehicle, and determining the vehicle route from the current location of the vehicle and a destination of the vehicle.

The method may comprise switching the engine between an operational state and a non-operational state based on the vehicle route and the predicted power level. When the engine is in an operational state, the method may comprise controlling a speed of the engine based on the vehicle route and the predicted power level.

The method may comprise controlling the operational state of the engine such that the power level of the battery unit is above a non-zero minimum-charge value from a start of the vehicle route to an end of the vehicle route. In this way, the power system may ensure that the battery unit always has electrical power to supply to the refrigeration system of the transport refrigeration unit.

The method may comprise controlling the operational state of the engine such that the power level of the battery unit will be below a first predetermined value when the vehicle reaches its destination. The first predetermined threshold value may be below 50%, below 45%, below 40%, below 35%, below 30%, below 25%, or below 20% of the capacity of the battery unit.

Since the battery unit can receive charge from an electric grid when the vehicle reaches its destination, the engine is desirably not operated close to the end of the vehicle route so as to allow the battery to discharge. In this way, fuel may be preserved and hence the cost of transporting the refrigerated goods may be reduced.

The method may comprise determining a first time at which to prevent further charging of the battery unit before the vehicle reaches its destination. The method may comprise determining the first time such that the power level of the battery unit will be below the first predetermined value when the vehicle reaches its destination. The method may comprise determining the first time such that the power level of the battery unit will be sufficient to power the refrigeration system of the transport refrigeration unit up until the vehicle reaches its destination. The method may comprise switching the engine to a non-operational state at the first time or to maintain the engine in a non-operational state at the first time.

Alternatively, if the power level of the battery unit will be insufficient to power the refrigeration system of the transport refrigeration unit up until the vehicle reaches its destination, the method may comprise switching the engine to an operational state or maintaining the engine in an operational state only for the amount of time it takes to partially charge the battery unit.

The method may comprise determining that the route of the vehicle passes through a region in which the engine should not be operated. The region in which the engine should not be operated may be a low emission zone or a low noise zone.

The method may comprise controlling the operational state of the engine such that the power level of the battery unit will be above a second predetermined value when the vehicle enters the region in which the engine should not be operated. The second predetermined level may be above 50%, above 55%, above 60%, above 65%, above 70%, above 75%, above 80%, above 85%, above 90%, or above 95% of the capacity of the battery unit.

Even when a current power level of the battery unit indicates that the engine does not need to be operated, it may be desirable to charge the battery unit so that there is sufficient charge in the battery unit to power the refrigeration system of the transport refrigeration unit as the vehicle passes through a region in which the engine should not be operated. In this way, the vehicle may avoid the need either to operate the engine within the region or to deactivate the refrigeration system of the transport refrigeration unit.

The method may comprise determining a second time at which to control the operational state of the engine, i.e. in order to charge the battery unit before the vehicle enters the region in which the engine should not be operated. The method may comprise determining the second time such that the power level of the battery unit will be above the second predetermined value when the vehicle enters the region.

In particular, the method may comprise switching the engine to an operational state at the second time or to maintain the engine in an operational state at the second time.

The method may comprise determining that the vehicle has entered a region in which the engine should not be operated, and to not operating the engine whilst the vehicle is within the region.

If the predicted power level indicates that the power level of the battery unit will become insufficient to power the refrigeration system whilst the vehicle is in the region, the method may comprise (temporarily) switching the engine to an operational state when the vehicle is in the region. Alternatively, the method may comprise switching the refrigeration system off when the vehicle is in the region,

The method may comprise (i) switching the engine to an operational state or (ii) switching the refrigeration system off, if the predicated power level indicates that the power level of the battery unit will become insufficient to power the refrigeration system whilst the vehicle is in the region based on a user setting.

The method may comprise determining a change in the vehicle route. The method may comprise changing the speed of the engine based on the change in the vehicle route. For example, if the change in the vehicle route indicates that the vehicle will enter a region in which the engine should not be operated when it would not have before (or sooner than it would have), and the predicted power level indicates that the battery unit will not have sufficient charge while the vehicle is in the region, the method may comprise switching the engine to an operational state or maintaining the engine in an operational state and, if the engine is at a reduced speed, the method may comprise increasing the speed of the engine in order to facilitate faster charging of the battery unit.

The method may comprise determining the current location of the vehicle using a position determining system. The method may comprise receiving a current location of the vehicle from the position determining system and determining the current location of the vehicle. The position determining system may be a GPS system.

The method may comprise controlling an operational state of the engine based on a current power level of the battery. For example, when the current power level falls below a low-battery threshold value, the method may comprise switching the engine to an operational state, and when the current power level exceeds a full-battery threshold value, the method may comprise switching the engine to a non-operational state.

The full-battery threshold value may be higher than the low-battery threshold value, but need not necessarily correspond to the maximum capacity of the battery. The low-battery threshold value may be below 50% of the battery capacity, and may be below 40% of the battery capacity. The full-battery capacity may be above 50% of the battery capacity, and may be above 75% of the battery capacity.

Viewed from a fourth aspect of the present invention, there is provided a power system for a transport refrigeration unit, the system comprising: a battery unit configured to supply electrical power to a refrigeration system of the transport refrigeration unit; a generator configured to charge the battery unit; an engine configured to drive the generator; and a control system configured to: monitor a power level of the battery unit; switch the engine between an operational state and a non-operational state based on the power level of the battery unit; and change a speed of the engine, when the engine is in an operational state, based on the power level of the battery unit.

The power system is configured to use a current power level of the battery unit to control the speed of the engine. Consequently, the speed of the engine may be increased to facilitate faster charging of the battery unit, or the speed of the engine may be decreased to facilitate slower charging of the battery unit. That is, the system may increase/decrease the speed of the engine as and when required.

The engine may be configured to operate with greater fuel efficiency at a lower speed than at a higher speed. The engine may be sized such that operation at the higher speed will cause the generator to generate more power than a maximum power demand of a refrigeration unit of the transport refrigeration unit. The engine may be sized such that operation at the lower speed will cause the generator to generate less power than a maximum power demand of a refrigeration unit of the transport refrigeration unit.

As the refrigeration unit is rarely run at maximum power, the system is highly fuel-efficiently because the battery can be charged (normally) by operating the engine at the lower, more fuel-efficient speed, and the charge in the battery can supply power to meet any spikes in energy demand from the refrigeration system. The engine then only needs to be operated at the higher, less fuel-efficient speed for any brief intervals when there is a sustained high demand from refrigeration system.

The generator may be configured to only charge the battery unit. That is, the generator may be configured to supply electrical power to only the battery unit.

By supplying electrical power generated by the generator to only the battery unit, the fuel used by the engine to drive the generator may be preserved, and hence the costs associated with transporting refrigerated goods may be reduced since, e.g. the generator does not need to supply electrical power to the refrigeration system of the transport refrigeration unit. Accordingly, the generator may be configured not to supply electrical power directly to the refrigeration system of the transport refrigeration unit.

Alternatively, the generator may be configured to supply electrical power to the refrigeration system in addition to supplying electrical power to the battery unit. In these embodiments, the control system may be configured to determine a power demand of the refrigeration system. When the power demand is greater than a predetermined threshold, the control system may be configured to switch the engine to an operational state, or maintain the engine in an operational state, so as to drive the generator to supply electrical power to the refrigeration system. Thus, the refrigeration system may be configured to receive electrical power from the generator alone.

When the power demand is less than the predetermined threshold and the power level of the battery unit indicates that the battery unit requires charging, the control system may be configured to switch the engine to an operational state, or maintain the engine in an operational state, so as to drive the generator to supply electrical power to both the refrigeration system and the battery unit. Accordingly, the generator may be configured to simultaneously provide electrical power to the refrigeration system and the battery unit.

When the power demand is less than the predetermined threshold and the power level of the battery unit indicates that the battery unit does not require charging, the control system may be configured to switch the engine to an non-operational state, or maintain the engine in a non-operational state, so as to supply electrical power to the refrigeration system from the battery unit alone. Thus, the refrigeration system may be configured to receive electrical power from the generator or from the battery unit depending on the power demand of the refrigeration system and a power level of the battery unit.

In other embodiments, when the power demand is greater than a maximum current output of the engine, the control system may be configured to switch the engine to an operational state, or maintain the engine in an operational state, and to supply electrical power to the refrigeration system from both the generator and the battery unit. Accordingly, the refrigeration system may be configured to simultaneously receive electrical power from the generator and from the battery unit.

The engine may be an engine of the transport refrigeration unit. That is, the engine may not be configured to provide motive force to the vehicle. In this way, control of the speed of the engine based on the power level of the battery unit may not be of detriment to the ability of the vehicle to transport refrigerated goods.

The control system may be configured to control the speed of the engine such that the power level of the battery unit is always above a non-zero minimum-charge value. In this way, the power system may ensure that the battery unit always has electrical power to supply to the refrigeration system of the transport refrigeration unit.

When the engine is in an operational state, the control system may be configured to control the speed at which the engine is operated, and hence the speed at which the battery unit is charged. For example, if the power level indicates a very low charge level of the battery unit, the control system may increase the speed of the engine in order to facilitate faster charging of the battery unit. Alternatively, if the power level indicates a high charge level of the battery unit, the control system may decrease the speed of the engine in order to facilitate slower charging of the battery unit.

The control system may be configured to decrease the speed of the engine when the power level of the battery unit increases past a first threshold. The first threshold may be above 50%, above 55%, above 60%, above 65%, above 70%, above 75%, above 80%, above 85%, or above 90%.

The control system may be configured to increase the speed of the engine when the power level of the battery unit reduces below a second threshold. The second threshold may be less than or equal to the first threshold. The second threshold may be below 50%, below 45%, below 40%, below 35%, below 30%, below 25%, or below 20%.

The control system may be configured to switch the engine to a non-operational state when the power level of the battery unit increases past a third threshold. The third threshold may be above 70%, above 75%, above 80%, above 85%, above 90%, or above 95%.

The control system may be configured to switch the engine to an operational state when the power level of the battery unit reduces below a fourth threshold. The fourth threshold may be below 60%, below 55%, below 50%, below 45%, below 40%.

Viewed from a fifth aspect of the present invention, there is provided a transport refrigeration unit of a vehicle, comprising: a refrigeration system configured to cool a compartment of the vehicle; and a power system as described above.

Viewed from a sixth aspect of the present invention, there is provided a method of powering a transport refrigeration unit, wherein the transport refrigeration unit comprises a refrigeration system, a battery unit for powering the refrigeration system, a generator for charging the battery unit, and an engine for driving the generator, the method comprising: monitoring a power level of the battery unit; switching the engine between an operational state and a non-operational state based on the power level of the battery unit; and changing a speed of the engine, when the engine is in an operational state, based on the power level of the battery unit.

The method uses a current power level of the battery unit to control the speed of the engine. Consequently, the speed of the engine may be increased to facilitate faster charging of the battery unit, or the speed of the engine may be decreased to facilitate slower charging of the battery unit. That is, the method may facilitate an increase/decrease in the speed of the engine as and when required.

The method may comprise operating the engine with greater fuel efficiency at a lower speed than at a higher speed. The engine may be sized such that operation at the higher speed will cause the generator to generate more power than a maximum power demand of a refrigeration unit of the transport refrigeration unit. The engine may be sized such that operation at the lower speed will cause the generator to generate less power than a maximum power demand of a refrigeration unit of the transport refrigeration unit.

As the refrigeration unit is rarely run at maximum power, the system is highly fuel-efficiently because the battery can be charged (normally) by operating the engine at the lower, more fuel-efficient speed, and the charge in the battery can supply power to meet any spikes in energy demand from the refrigeration system. The engine then only needs to be operated at the higher, less fuel-efficient speed for any brief intervals when there is a sustained high demand from refrigeration system.

The method may comprise using the generator to only charge the battery unit. That is, the method may comprise supplying electrical power from the generator to only the battery unit.

By supplying electrical power generated by the generator to only the battery unit, the fuel used by the engine to drive the generator may be preserved, and hence the costs associated with transporting refrigerated goods may be reduced since, e.g. the generator does not need to supply electrical power to the refrigeration system of the transport refrigeration unit. Accordingly, the method may comprise not supplying electrical power directly from the generator to the refrigeration system of the transport refrigeration unit.

Alternatively, the method may comprise supplying electrical power to the refrigeration system from the generator, in addition to supplying electrical power to the battery unit. In these embodiments, the method may comprise determining a power demand of the refrigeration system. When the power demand is greater than a predetermined threshold, the method may comprise switching the engine to an operational state, or maintaining the engine in an operational state, so as to drive the generator to supply electrical power to the refrigeration system. Thus, the method may comprise supplying electrical power to the refrigeration system from the generator alone.

When the power demand is less than the predetermined threshold and the power level of the battery unit indicates that the battery unit requires charging, the method may comprise switching the engine to an operational state, or maintaining the engine in an operational state, so as to drive the generator to supply electrical power to both the refrigeration system and the battery unit. Accordingly, the method may comprise simultaneously supplying electrical power from the generator to the refrigeration system and the battery unit.

When the power demand is less than the predetermined threshold and the power level of the battery unit indicates that the battery unit does not require charging, the method may comprise switching the engine to an non-operational state, or maintaining the engine in a non-operational state, so as to supply electrical power to the refrigeration system from the battery unit alone. Thus, the method may comprise supplying electrical power to the refrigeration system from the generator or from the battery unit depending on the power demand of the refrigeration system and a power level of the battery unit.

In other embodiments, when the power demand is greater than a maximum current output of the engine, the method may comprise switching the engine to an operational state, or maintaining the engine in an operational state, and supplying electrical power to the refrigeration system from both the generator and the battery unit. Accordingly, the method may comprise supplying electrical power to the refrigeration system from the generator and from the battery unit simultaneously.

The engine may be an engine of the transport refrigeration unit. Thus, the method may comprise not providing motive force to the vehicle. In this way, control of the speed of the engine based on the power level of the battery unit may not be of detriment to the ability of the vehicle to transport refrigerated goods.

The method may comprise controlling the speed of the engine such that the power level of the battery unit is always above a non-zero minimum-charge value. In this way, the power system may ensure that the battery unit always has electrical power to supply to the refrigeration system of the transport refrigeration unit.

When the engine is in an operational state, the method may comprise controlling the speed at which the engine is operated, and hence the speed at which the battery unit is charged. For example, if the power level indicates a very low charge level of the battery unit, the speed of the engine may be increased in order to facilitate faster charging of the battery unit. Alternatively, if the power level indicates a high charge level of the battery unit, the speed of the engine may be decreased in order to facilitate slower charging of the battery unit.

The method may comprise decreasing the speed of the engine when the power level of the battery unit increases past a first threshold. The first threshold may be above 50%, above 55%, above 60%, above 65%, above 70%, above 75%, above 80%, above 85%, or above 90%.

The method may comprise increasing the speed of the engine when the power level of the battery unit reduces below a second threshold. The second threshold may be less than or equal to the first threshold. The second threshold may be below 50%, below 45%, below 40%, below 35%, below 30%, below 25%, below 20%.

The method may comprise switching the engine to a non-operational state when the power level of the battery unit increases past a third threshold. The third threshold may be above 70%, above 75%, above 80%, above 85%, above 90%, or above 95%.

The method may comprise switching the engine to an operational state when the power level of the battery unit reduces below a fourth threshold. The fourth threshold may be below 60%, below 55%, below 50%, below 45%, or below 40%.

Viewed from a seventh aspect of the present invention, there is provided a method of retrofitting a battery unit to a transport refrigeration unit of a vehicle, wherein the transport refrigeration unit comprises a refrigeration system, an engine, and a generator coupled to the engine and the refrigeration system, the method comprising: decoupling the generator from the refrigeration system; coupling the generator to a battery unit; and coupling the battery unit to the refrigeration system.

The transport refrigeration unit may comprise a controller, and the method may comprise loading new control software onto the controller or replacing the controller with a new controller comprising new control software. The new control software may be configured to cause the controller to operate as described above.

The method of retrofitting may result in a power system for the TRU as described above.

Certain preferred embodiments of the invention will now be described by way of example only and with reference to the accompanying drawings, in which:
Figure 1 shows a schematic representation of a vehicle having a transport refrigeration unit (TRU);
Figure 2 shows a schematic diagram of a power system for the TRU of the vehicle, and
Figure 3 shows a schematic diagram of a second power system for the TRU of the vehicle.

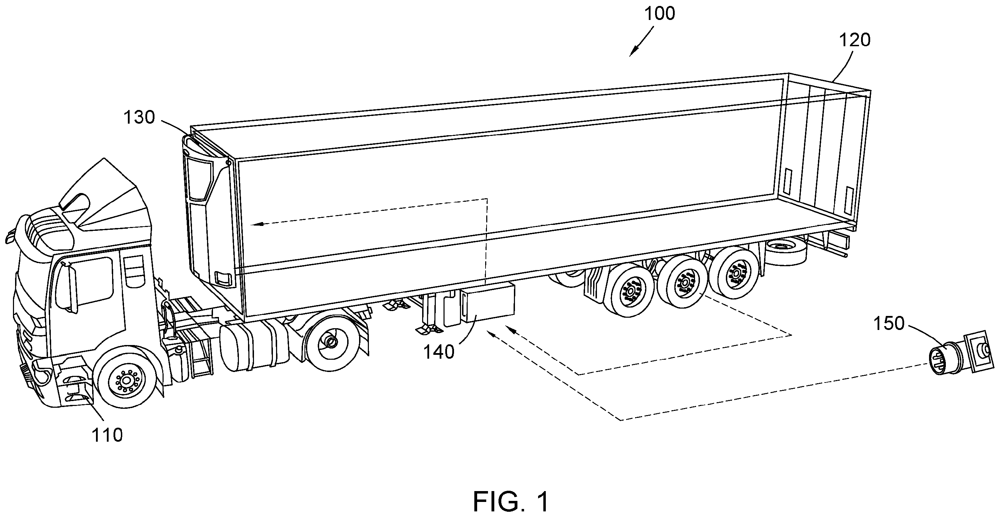

Figure 1 shows a schematic representation of a vehicle 100, which in the present illustration is an articulated lorry comprising a tractor 110 and a trailer 120. The vehicle 100 comprises a transport refrigeration unit (TRU) 130, which in the present embodiment is a Vector^{®} TRU, located in communication with the trailer 120. The TRU 130 is configured to regulate the environment within the trailer 120, e.g. by controlling a temperature and a humidity within the trailer 120. The TRU 130 is powered by a battery unit 140, which may be charged via a generator (not shown in Figure 1) driven by an engine (not shown in Figure 1) of the TRU 130. Additionally, the battery unit 140 may be charged via a mains electric grid 150, i.e. when the vehicle 100 is stationary.

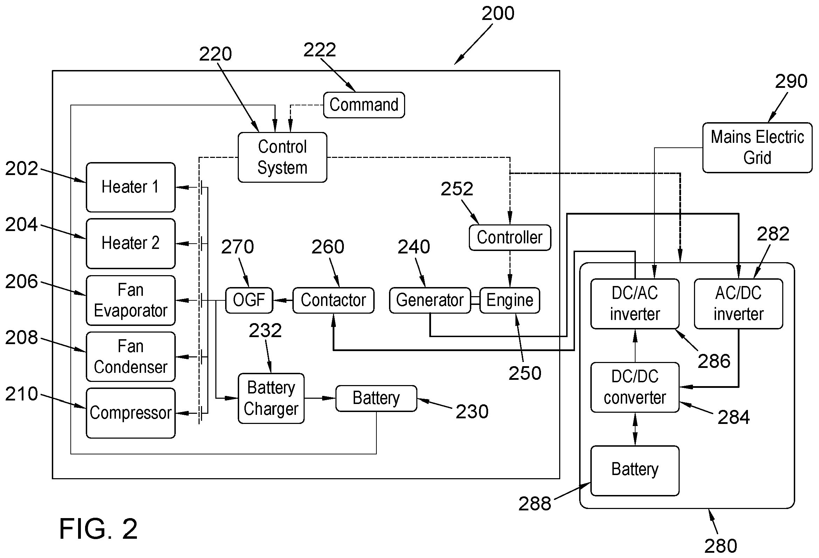

Figure 2 shows a schematic diagram of a power system for the TRU 200 of the vehicle 100 shown in Figure 1. As illustrated, the TRU 200 comprises a refrigeration system configured to change environmental conditions within, e.g. the trailer 120 of the vehicle 100. In this particular arrangement, the refrigeration system comprises a plurality of components including a first heater 202, a second heater 204, a fan evaporator 206, a fan condenser 208, and a compressor 210. However, in various arrangements, the refrigeration system may comprise any combination of components.

A control system 220 is configured to control operation of the refrigeration system based on an input command 222. The input command 222 may be received from an operator of the vehicle 100, or from an external control system. As illustrated, the control system 220 is in communication with the each of the plurality of components of the refrigeration system. The control system 220 is also in communication with a TRU engine controller 252. The control system 220 is powered by a controller battery 230 housed within the TRU 200 that ensures that the control system 220 always has power.

The power system of the TRU 200 further comprises a battery unit 280 configured to supply electrical power to the components of the refrigeration system of the TRU 200. The battery unit 280 is in electrical communication with a contactor 260 (e.g. a power supply contactor), which is configured to selectively connect and disconnect the battery unit 280 from the refrigeration system. The contactor 260 is in electrical communication with an overload ground fault (OGF) module 270, which in turn is in electrical communication with the components of the refrigeration system. The OGF module 270 is configured to disconnect the battery unit 280 from the refrigeration system in the event of an overload ground fault, i.e. the unintentional flowing of electrical current to earth. Thus, electrical power is supplied from the battery unit 280 to the components of the refrigeration system via the contactor 260 and the OGF module 270.

The battery unit 280 is also in electrical communication with a controller battery charger 232, also via the contactor 260 and the OGF module 270, which in turn is in electrical communication with the controller battery 230. Accordingly, electrical power can also be supplied from the battery unit 280 to the controller battery 230 via the contactor 260, the OGF module 270 and the battery charger 232, i.e. to facilitate charging of the controller battery 230.

The battery unit 280 comprises a DC/DC converter 284, a DC/AC inverter 286, a battery 288, and an AC/DC inverter 282. The DC/DC converter 284 is connected to the battery 288. Whilst in the present embodiment a battery 288 is provided in the battery unit 280, in various embodiments a capacitor, a cell or the like could be used in place of, or in combination with, the battery 288.

The battery unit 280 supplies electrical power to the refrigeration system of the TRU 200 from the battery 288. In particular, the battery 288 supplies electrical power to the DC/DC converter 284, which will step up/down the voltage as required. The DC/DC converter 284 supplies converted DC electrical power to the DC/AC inverter 286, which inverts the DC electrical power into AC electrical power, to be supplied to the refrigeration system of the TRU 200.

The TRU 200 further comprises a generator 240 and an engine 250. The generator 240 is mechanically connected to the engine 250 via mechanical driving means. The generator 240 is configured to generate electrical power when driven by the engine 250.

The generator 240 is configured to supply electrical power to the battery unit 280. As illustrated, the generator 240 is in electrical communication with the AC/DC inverter 282 of the battery unit 280. The generator 240 supplies electrical power to the AC/DC inverter 282. The AC/DC inverter 282 converts the AC electrical power generated by the generator 240 to DC electrical power, and supplies the DC electrical power to the DC/DC converter 284. The DC/DC converter 284 steps up/down the voltage as required, and then supplies the converted DC electrical power to the battery 288, i.e. to facilitate charging of the battery 288.

The battery 288 can therefore be charged by the generator 240 at any time, i.e. when the vehicle is in motion and/or is stationary, using the engine 250 of the TRU.

Whilst in the present embodiment an AC/DC inverter 282 and a DC/AC inverter 286 are provided in the battery unit 280, in various embodiments the battery unit 280 may instead be provided with a bi-directional AC/DC inverter that provides equivalent functionality.

The battery unit 280 further comprises a connector for connection to a mains electric grid 290. Where possible, the battery 288 is preferably charged from the mains electric grid 290, i.e. when the vehicle 100 is in a depot or the like. Typically charging the battery 288 using mains electricity is cheaper and more environmentally friendly than charging the battery 288 using the engine 250.

As illustrated the generator 240 is electrically disconnected from the contactor 260. The generator 240 is therefore configured to only supply electrical power to the battery unit 280, and the TRU 200 is configured to only receive electrical power from the battery unit 280.

The illustrated design is particularly advantageous as a retrofit system. In existing Vector^{®} TRU systems, the generator 240 is connected to the OGF 270 via a generator contactor (not shown), and no battery unit 280 is present. Such systems may be unnecessarily noisy and fuel inefficient, as the engine 250 must be operated continuously when the refrigerant system is operating, even when operating with only a low demand.

By disconnecting the generator 240 from the generator contactor, installing a battery unit 280, and either repurposing the generator contactor as a power supply contactor 260 or installing a new power supply contactor 260 in the manner shown, the engine 250 can be operated at maximum fuel efficiency to charge the battery 288, and then turned off. This results in more fuel efficient power generation, and greater periods of time when the engine is off and so does not generate noise.

The engine controller 252 is in communication with the engine 250. The engine controller 252 is configured to control operation of the engine 252 based on instructions received from the control system 220. For example, the engine controller 252 is configured to control the operational state of the engine 252 and/or the speed of the engine 250.

The control system 220 is in communication with the battery unit 280, and is configured to monitor a current power level of the battery unit 280. During a normal mode of operation, if the current power level indicates that the battery unit 280 requires charging, i.e. if the charge of the battery unit 280 is low (e.g. 50% capacity in the present embodiment), the engine 250 may be switched to an operational state and kept in this state until the charge level of battery unit 280 is full. Once no further charging is required, i.e. if the charge of the battery unit 280 is full (e.g. 95% capacity in the present embodiment), the engine 250 may be switched to a non-operational state, and will remain in this state as the battery unit 280 discharges back down to the low level.

The current power level of the battery unit 280 may also give an indication of the speed at which the battery unit 280 should be charged, i.e. whether the battery unit 280 can be charged slowly by operating the engine 250 at a lower, more fuel-efficient speed, or whether the engine 250 should be operated at a faster, less fuel-efficient speed so as to facilitate faster charging.

In particular, the engine 250 may be initially operated at the lower speed. Then, if the current power level of the battery unit 280 falls to a very low level, for example if it is below a first threshold (e.g. 30% capacity in the present embodiment), the speed of the engine 250 may be increased, i.e. to facilitate faster charging of the battery unit 280 using electrical power generated by the generator 240. Similarly, once the current power level of the battery unit 280 reaches a high level, or is above a second threshold (i.e. 50% capacity in the present embodiment), the speed of the engine 280 may be decreased to the lower speed to increase fuel efficiency.

Thus, during normal operation, the control system 220 may be configured to monitor a current power level of the battery unit 280, and may be configured to change an operational state and a speed of the engine 250 based on the power level of the battery unit 280.

The control system 220 may be in communication with an external position determining system (not shown), e.g. a GPS device, associated with the tractor of the vehicle. The position determining system may determine a current location of the vehicle. In some embodiments, the positioning system may be incorporated within the control system 220.

During the normal mode of operation, the control system 220 will switch the engine 250 to an operational state if a current power level of the battery unit 280 indicates that the battery unit 280 requires charging, as described above. However, if the current location indicates that the vehicle 100 has entered a region in which the engine 250 should not be operated, such as a low noise zone or a low emission zone, the control system 220 may switch the engine 250 to a non-operational state, if not already.

A region in which the engine should not be operated may be a low emission zone (LEZ) or a low noise zone (LNZ). LEZs are regions where vehicles which emit higher levels of pollutants are regulated. For example, some LEZs do not permit vehicles which emit higher levels of pollutants to enter the region under any circumstance. Other LEZs permit these vehicles to enter the region, but only within restricted times and/or with payment of a (higher) fee. Similarly, LNZs are regions where vehicles with louder engines are regulated. For example, some LNZs do not permit vehicles with louder engines to enter the region under any circumstance. Other LNZs permit these vehicles to enter the region, but only within restricted times and/or with payment of a (higher) fee.

The control system 220 will maintain the engine 250 in a non-operational state whilst the vehicle 100 is within the region in which the engine 250 should not be operated, even when it would normally switch the engine 250 to an operational state, for example when a charge level of the battery unit 280 is low.

If a current power level of the battery unit 280 indicates that the charge of the battery unit 280 is very low (e.g. the charge level falls below 10% capacity in the present embodiment), the engine 250 may be switched to an operational state even whilst the vehicle 100 is in a region in which the engine 250 should not be operated. This will prevent failure of the refrigeration system if there is insufficient charge in the battery unit 280 to operate the refrigeration system.

Alternatively, for example based on a user setting, if the vehicle 100 is in a region in which the engine 250 should not be operated and the charge of the battery unit 280 is very low, the engine 250 may be maintained in a non-operational state. This may result in the refrigeration system stopping due to lack of power from the battery unit 280.

The normal mode of operation described above is based on a current power level of the battery unit 280 and a current location of the vehicle 100, and provides reactive control of the engine 250. However, predictive control of the engine 250 may preserve fuel and reduce costs associated with transporting refrigerated goods.

Thus, the control system 220 is configured to further provide a predictive mode of operation. Under certain conditions, the normal mode of operation may be superseded by the predictive mode of operation, as will now be discussed.

The control system 200 is configured to receive or determine a current location of the vehicle 100. Based on this information, the control system 220 can determine a vehicle route to a destination of the vehicle 100, and further can predict how a power level of the battery unit 280 will change on the vehicle route.

In the predictive mode of operation, the control system 220 will control an operational state of the engine 250 based on the vehicle route and the predicted power level. Determining the vehicle route allows the controller 220 to predict how a power level of the battery unit 280 will change throughout a journey of the vehicle 100. In particular, the predicted power level may indicate when on the vehicle route the battery unit 280 will require charging (i.e. when to operate the engine 250) and/or when on the vehicle route the engine 250 should not be operated. The control system 220 can therefore determine when to change the operational state of the engine 250, i.e. from an operational state to a non-operational state, and vice versa.

The predicted power level may provide an indication of the predicted charge level of the battery unit 280 at an end of the journey, i.e. when the vehicle reaches its destination. For example, the predicted power level may indicate that the battery unit 280 will be high, or above a first predetermined level, at the end of the journey (e.g. over 50% of the battery unit's 280 capacity). This may be undesirable if the battery unit 280 requires charging one or more times over the vehicle route, as charging the battery unit 280 using the engine 250 is more costly and less environmentally friendly than charging the battery unit 280 using the main electric grid 290.

Consequently, in this case, it may not be necessary to charge the battery unit 280 if the predicted power level of the battery unit indicates that there is sufficient charge to power the refrigeration system of the TRU 200 up until the vehicle 100 reaches its destination. Alternatively, in the case where there is insufficient charge to power the refrigeration system of the TRU 200 up until the vehicle 100 reaches its destination, the control system 220 may operate the engine 250 to only partially charge the battery unit 280. For example, instead of charging the battery unit 280 to a full level, it may charge the battery unit 280 to a level below the full level. The intermediate level may be selected so that the battery unit 280 will have a low or very low charge level (e.g. below 30% of the capacity of the battery unit 280) when the vehicle 100 reaches its destination.

Since an electric grid 290 can charge the battery unit 280 when the vehicle 100 reaches its destination, the engine 250 does not need to be operated close to the end of the journey and/or does not need to fully charge the battery unit 280 close to the end of the journey. In this case, it may be desirable to discharge the battery unit 280 towards the end of the journey, i.e. before the vehicle reaches its destination, by switching the engine 250 to a non-operational state or by not fully charging the battery unit 280, thereby preserving fuel and reducing the cost of transporting refrigerated goods.

Thus, in the predictive mode of operation, the control system 220 may control the operational state of the engine 250 such that the power level of the battery unit 280 is below a predetermined value when the vehicle reaches its destination.

The vehicle route may indicate that the vehicle will pass through a region in which the engine 250 should not be operated.

When the vehicle route indicates that vehicle 100 will pass through a region in which the engine 250 should not be operated, it may be desirable to pre-emptively charge the battery unit 280 so that there is sufficient charge to power the refrigeration system of the TRU 200 as the vehicle 100 passes through the region in which the engine 250 should not be operated.

Therefore, in the predictive mode of operation, the engine 280 is switched to an operational state at a predetermined time before the vehicle 100 is predicted to enter the region, i.e. to facilitate charging of the battery unit 280. Once the battery unit 280 is sufficiently charged and prior to the vehicle entering the region, the engine 250 is switched to a non-operational state. The engine 250 will then remain in this state until after the vehicle has left the region in which the engine 250 should not be operated.

Once the vehicle 100 enters the region in which the engine 250 should not be operated, the control system 220 may control the engine 250 in accordance with the normal mode of operation, as described above.

Thus, in these embodiments, the need to operate the engine 250 within the region or to deactivate the refrigeration system of the transport refrigeration unit is reduced because the battery unit 280 will be fully charged before entering the region in which the engine 250 should not be operated, the.

Since the battery unit 280 will be sufficiently charged before the vehicle 100 enters the region, it may be desirable to charge the battery unit 280 so that the power level when the vehicle enters the region is above a second predetermined level (i.e. over 90% capacity in the present embodiment).

Thus, the control system 220 may be configured to determine that the route of the vehicle 100 passes through a region in which the engine 250 should not be operated, and control the operational state of the engine 250 such that the power level of the battery unit is above a second predetermined value when the vehicle 100 enters the region in which the engine 250 should not be operated.

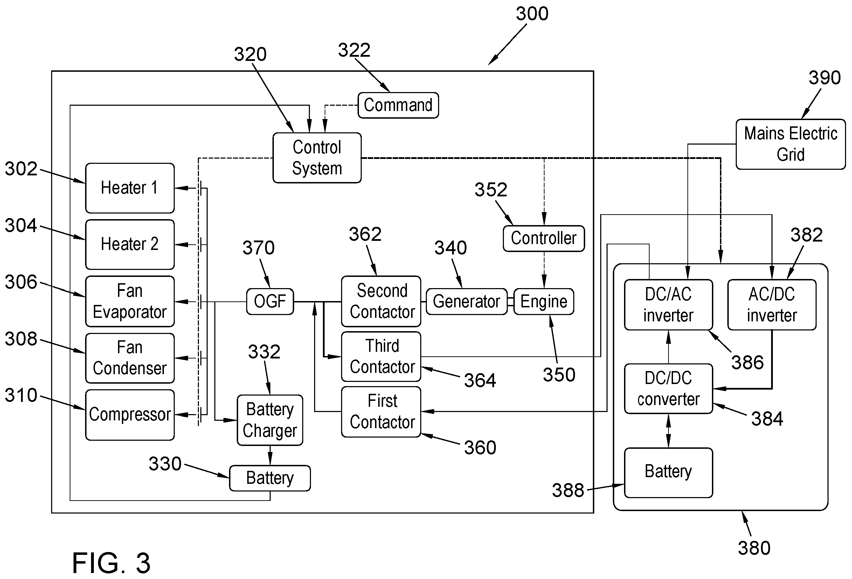

Figure 3 shows a schematic diagram of a second power system for the TRU 300 of the vehicle shown in Figure 1. The architecture of the power system 300 is similar to that of the embodiment shown in Figure 2, except that the generator 340 is further configured to supply electrical power to the components of the refrigeration system of the TRU 300.

In this system, the generator 340 and the battery unit 380 are both able to supply power to the components of the refrigeration system. The control system 320 selects the most suitable power source to use.

The generator 340 is in electrical communication with a second contactor 362 (e.g. a generator contactor), which is in electrical communication with the OGF module 370. The second contactor 362 is also in electrical communication with a third contactor 364 (e.g. a battery charging contactor), which is in electrical communication with the battery unit 380.

The power system of Figure 3 operates in a similar manner to the power system of Figure 2. However, as illustrated, the generator 340 is now capable of supplying electrical power to the components of the refrigeration system directly, i.e. without going through the battery 388.

When the generator 340 is used to power the components of the refrigeration system, the engine 350 is operated to drive the generator 340, which supplies power to the components of the refrigeration system via the second contactor 362. Optionally in this state, the generator 340 may also provide power to the battery unit 380 via the third contactor 364.

When the battery unit 380 is used to power the components of the refrigeration system, battery unit 380 supplies power to the components of the refrigeration system via the first contactor 360.

When the refrigeration system is operating at maximum current draw, i.e. using all of the power from the generator 340, direct supply of power from the generator 340 to the refrigeration system components is more energy efficient than using the generator 340 to power the battery 388 and in turn using the battery 388 to power the components because of losses arising from storing and recovering energy in the battery 388.

The control system 320 is configured to determine a power demand of the components of the refrigeration system, and to control operation of the engine 350 and the contactors 360, 362, 364 based on the power demand of the components of the refrigeration system and the state of charge of the battery unit 380.

When the power demand of the refrigeration system is operating at close to maximum current draw and/or a power level of the battery unit 380 indicates that the battery unit 380 requires charging, the control system 320 may be configured to switch the engine 350 to an operational state, or maintain the engine 350 in an operational state, and engage the second contactor 362 in order to drive the generator 340 to supply electrical power to the refrigeration system via the second contactor 362.

When the power demand is close to maximum current draw, there may not be excess power to charge the battery unit 364, and so the third contactor 364 may be disengaged.

When the power demand of the refrigeration system is operating at levels below maximum current draw, the control system 320 may select to use either the engine 350 and generator 340 to power the components of the refrigeration system or use the battery unit 380 to power the components of the refrigeration system.

In this condition, when the state of charge of the battery unit 388 is low, the control system 320 may select to use the engine and generator 340 to power the components of the refrigeration system via the second contactor 362, and the excess power can be used to recharge the battery unit 380 via the third contactor 364. In this state of operation, the first contactor 360 may be disengaged to disconnect the battery unit 380 from the components of the refrigeration system.

Alternatively, when the state of charge of the battery unit 388 is high, the control system 320 may select to use the battery unit 380 to power the components of the refrigeration system via the first contactor 360, and the engine 350 may be deactivated. In this state of operation, the battery unit 380 will discharge until it reaches a level where the control system 320 engages the engine 350 to power the components and recharge the battery unit 380.

Optionally, the engine 350 and battery unit 380 may be sized so that they can only satisfy the maximum current draw of the refrigeration system when current is supplied from both the generator 340 and the battery unit 380. This configuration would limit the time when the refrigeration system can operate at maximum current draw, due to the available charge in the battery unit 380. However, it may facilitate use of a smaller engine 350, which reduces costs associated with the TRU 300.

As described above, many vehicles are in use today that comprise a TRU 200, 300, but do not comprise a battery unit 280, 380 coupled to the TRU 200, 300. However, as described above, a battery unit 280, 380 may be retrofitted to such vehicles.

In a first embodiment, the battery unit 280 may be retrofitted by decoupling the engine 250 from the refrigeration system, and instead coupling the engine 250 to the retrofit battery unit 280, and coupling the retrofitted battery unit 280 to the refrigeration system and to the control system 220.

This retrofitting process results in a configuration as shown in Figure 2.

In a second embodiment, the battery unit 380 may be retrofitted by additionally coupling the engine 250 to the retrofit battery unit 380, and coupling the retrofitted battery unit 280 to the refrigeration system and to the control system 220 in parallel with the engine 250. This retrofitting process results in a configuration as shown in Figure 3.

Additionally, in both cases, updated software may be loaded on the control system 220, 320 to facilitate control of the engine 250, 350 based on data received from the battery unit 280, 380, as described above.

## Claims

1. A power system for a transport refrigeration unit (200) of a vehicle, the system comprising:
a battery unit (280) configured to supply electrical power to a refrigeration system of the transport refrigeration unit (200);
a generator (240) configured to charge the battery unit (280);
an engine (250) configured to drive the generator (240); and
a control system (220) configured to:
receive or determine a vehicle route from a current location of the vehicle to a destination of the vehicle;
predict how a power level of the battery unit (280) will change on the vehicle route; **characterized in that** said control system (220) is further configured to control an operational state of the engine (250) based on the vehicle route and the predicted power level.

2. A system according to claim 1, wherein the control system (220) is configured to:
control the operational state of the engine (250) such that the power level of the battery unit (280) is below a first predetermined value when the vehicle reaches its destination.

3. A system according to claim 1 or 2, wherein the control system (220) is configured to:
determine that the route of the vehicle passes through a region in which the engine (250) should not be operated; and
control the operational state of the engine (250) such that the power level of the battery unit (280) is above a second predetermined value when the vehicle enters the region in which the engine (250) should not be operated.

4. A system according to claim 3, wherein the region in which the engine (250) should not be operated is a low emission zone or a low noise zone.

5. A system according to any preceding claim, comprising:
a position determining system for determining the current location of the vehicle.

6. A transport refrigeration unit (200) of a vehicle, comprising:
a refrigeration system configured to cool a compartment of the vehicle; and
a power system according to any preceding claim.

7. A method of powering a transport refrigeration unit (200) of a vehicle, wherein the transport refrigeration unit (200) comprises a refrigeration system, a battery unit (280) for powering the refrigeration system, a generator (240) for charging the battery unit (280), and an engine (250) for driving the generator (240), the method comprising:
determining a vehicle route from a current location of the vehicle to a destination of the vehicle;
predicting how a power level of the battery unit (280) will change on the vehicle route; **characterized in that** the method further comprises:
controlling an operational state of the engine (250) based on the vehicle route and the predicted power level.

8. A method according to claim 7, comprising:
controlling the operational state of the engine (250) such that the power level of the battery unit (280) is below a first predetermined value when the vehicle reaches its destination.

9. A method according to claim 7 or 8, comprising:
determining that the route of the vehicle passes through a region in which the engine (250) should not be operated; and
controlling the operational state of the engine (250) such that the power level of the battery unit (280) is above a second predetermined value when the vehicle enters the region in which the engine (250) should not be operated.

10. A method according to claim 9, wherein the region in which the engine (250) should not be operated is a low emission zone or a low noise zone.

11. A power system for a transport refrigeration unit (200), the system comprising:
a battery unit (280) configured to supply electrical power to a refrigeration system of the transport refrigeration unit (200);
a generator (240) configured to charge the battery unit (280);
an engine (250) configured to drive the generator (240); and
a control system (220) configured to:
monitor a power level of the battery unit (280);
switch the engine between an operational state and a non-operational state (250) based on the power level of the battery unit (280);
**characterized in that** said control system (220) is further configured to: when the engine (250) has been switched to the operational state, further
change a speed of the engine (250) based on the power level of the battery unit (280).

12. The system of claim 11, wherein the control system (220) is configured to:
decrease the speed of the engine (250) when the power level of the battery unit (280) increases past a first threshold; and
increase the speed of the engine (250) when the power level of the battery unit (280) reduces below a second threshold;
wherein the second threshold is less than or equal to the first threshold.

13. A transport refrigeration unit (200) of a vehicle, comprising:
a refrigeration system configured to cool a compartment of the vehicle; and
a power system according to claim 11 or 12.

14. A method of powering a transport refrigeration unit (200), wherein the transport refrigeration unit (200) comprises a refrigeration system, a battery unit (280) for powering the refrigeration system, a generator (240) for charging the battery unit (280), and an engine (250) for driving the generator (240), the method comprising:
monitoring a power level of the battery unit (280);
switching the engine between an operational state and a non-operational state (250) based on the power level of the battery unit (280); **characterized in that** said method further comprises: when the engine (250) has been switched to the operational state, further
changing a speed of the engine (250) based on the power level of the battery unit (280).

15. A method as claimed in claim 14, further comprising:
decreasing the speed of the engine (250) when the power level of the battery unit (280) increases past a first threshold; and
increasing the speed of the engine (250) when the power level of the battery unit (280) reduces below a second threshold;
wherein the second threshold is less than or equal to the first threshold.

## Patentansprüche

1. Stromsystem für eine Transportkühleinheit (200) eines Fahrzeugs, wobei das System Folgendes umfasst:
eine Batterieeinheit (280), die dazu konfiguriert ist, ein Kühlsystem der Transportkühleinheit (200) mit elektrischem Strom zu versorgen;
einen Generator (240), der dazu konfiguriert ist, die Batterieeinheit (280) zu laden;
einen Motor (250), der dazu konfiguriert ist, den Generator (240) anzutreiben; und
ein Steuersystem (220), das zu Folgendem konfiguriert ist:
Empfangen oder Bestimmen einer Fahrzeugroute von einem aktuellen Standort des Fahrzeugs zu einem Ziel des Fahrzeugs;
Vorhersagen, wie sich ein Strompegel der Batterieeinheit (280) auf der Fahrzeugroute ändern wird; **dadurch gekennzeichnet, dass** das Steuersystem (220) ferner dazu konfiguriert ist, einen Betriebszustand des Motors (250) basierend auf der Fahrzeugroute und dem vorhergesagten Strompegel zu steuern.

2. System nach Anspruch 1, wobei das Steuersystem (220) zu Folgendem konfiguriert ist:
Steuern des Betriebszustands des Motors (250) derart, dass der Strompegel der Batterieeinheit (280) unter einem ersten vorgegebenen Wert liegt, wenn das Fahrzeug sein Ziel erreicht.

3. System nach Anspruch 1 oder 2, wobei das Steuersystem (220) zu Folgendem konfiguriert ist:
Bestimmen, dass die Route des Fahrzeugs durch einen Bereich führt, in dem der Motor (250) nicht betrieben werden sollte; und
Steuern des Betriebszustands des Motors (250) derart, dass der Strompegel der Batterieeinheit (280) über einem zweiten vorgegebenen Wert liegt, wenn das Fahrzeug in den Bereich einfährt, in dem der Motor (250) nicht betrieben werden sollte.

4. System nach Anspruch 3, wobei der Bereich, in dem der Motor (250) nicht betrieben werden sollte, eine Niedrigemissionszone oder eine Niedriglärmzone ist.

5. System nach einem der vorhergehenden Ansprüche, umfassend:
ein Positionsbestimmungssystem zum Bestimmen des aktuellen Standorts des Fahrzeugs.

6. Transportkühleinheit (200) eines Fahrzeugs, umfassend:
ein Kühlsystem, das dazu konfiguriert ist, einen Raum des Fahrzeugs zu kühlen; und
ein Stromsystem nach einem der vorhergehenden Ansprüche.

7. Verfahren zum Versorgen einer Transportkühleinheit (200) eines Fahrzeugs mit Strom, wobei die Transportkühleinheit (200) ein Kühlsystem, eine Batterieeinheit (280) zum Versorgen des Kühlsystems mit Strom, einen Generator (240) zum Laden der Batterieeinheit (280) und einen Motor (250) zum Antreiben des Generators (240) umfasst, wobei das Verfahren Folgendes umfasst:
Bestimmen einer Fahrzeugroute von einem aktuellen Standort des Fahrzeugs zu einem Ziel des Fahrzeugs;
Vorhersagen, wie sich ein Strompegel der Batterieeinheit (280) während der Fahrzeugroute ändern wird; **dadurch gekennzeichnet, dass** das Verfahren ferner Folgendes umfasst:
Steuern eines Betriebszustands des Motors (250) basierend auf der Fahrzeugroute und dem vorhergesagten Strompegel.

8. Verfahren nach Anspruch 7, umfassend:
Steuern des Betriebszustands des Motors (250) derart, dass der Strompegel der Batterieeinheit (280) unter einem ersten vorgegebenen Wert liegt, wenn das Fahrzeug sein Ziel erreicht.

9. Verfahren nach Anspruch 7 oder 8, umfassend:
Bestimmen, dass die Route des Fahrzeugs durch einen Bereich führt, in dem der Motor (250) nicht betrieben werden sollte; und
Steuern des Betriebszustands des Motors (250) derart, dass der Strompegel der Batterieeinheit (280) über einem zweiten vorgegebenen Wert liegt, wenn das Fahrzeug in den Bereich einfährt, in dem der Motor (250) nicht betrieben werden sollte.

10. Verfahren nach Anspruch 9, wobei der Bereich, in dem der Motor (250) nicht betrieben werden sollte, eine Niedrigemissionszone oder eine Niedriglärmzone ist.

11. Stromsystem für eine Transportkühleinheit (200), wobei das System Folgendes umfasst:
eine Batterieeinheit (280), die dazu konfiguriert ist, ein Kühlsystem der Transportkühleinheit (200) mit elektrischem Strom zu versorgen;
einen Generator (240), der dazu konfiguriert ist, die Batterieeinheit (280) zu laden;
einen Motor (250), der dazu konfiguriert ist, den Generator (240) anzutreiben; und
ein Steuersystem (220), das zu Folgendem konfiguriert ist:
Überwachen eines Strompegels der Batterieeinheit (280);
Umschalten des Motors zwischen einem Betriebszustand und einem Nichtbetriebszustand (250) basierend auf dem Strompegel der Batterieeinheit (280);
**dadurch gekennzeichnet, dass** das Steuersystem (220) ferner zu Folgendem konfiguriert ist: wenn der Motor (250) in den Betriebszustand umgeschaltet worden ist, weiteres Ändern einer Drehzahl des Motors (250) basierend auf dem Strompegel der Batterieeinheit (280).

12. System nach Anspruch 11, wobei das Steuersystem (220) zu Folgendem konfiguriert ist:
Verringern der Drehzahl des Motors (250), wenn der Strompegel der Batterieeinheit (280) über einen ersten Schwellenwert ansteigt; und
Erhöhen der Drehzahl des Motors (250), wenn der Strompegel der Batterieeinheit (280) unter einen zweiten Schwellenwert abfällt; wobei der zweite Schwellenwert kleiner oder gleich dem ersten Schwellenwert ist.

13. Transportkühleinheit (200) eines Fahrzeugs, umfassend:
ein Kühlsystem, das dazu konfiguriert ist, einen Raum des Fahrzeugs zu kühlen; und
ein Stromsystem nach Anspruch 11 oder 12.

14. Verfahren zum Versorgen einer Transportkühleinheit (200) mit Strom, wobei die Transportkühleinheit (200) ein Kühlsystem, eine Batterieeinheit (280) zum Versorgen des Kühlsystems mit Strom, einen Generator (240) zum Laden der Batterieeinheit (280) und einen Motor (250) zum Antreiben des Generators (240) umfasst, wobei das Verfahren Folgendes umfasst:
Überwachen eines Strompegels der Batterieeinheit (280);
Umschalten des Motors zwischen einem Betriebszustand und einem Nichtbetriebszustand (250) basierend auf dem Strompegel der Batterieeinheit (280); **dadurch gekennzeichnet, dass** das Verfahren ferner Folgendes umfasst: wenn der Motor (250) in den Betriebszustand umgeschaltet worden ist, weiteres Ändern einer Drehzahl des Motors (250) basierend auf dem Strompegel der Batterieeinheit (280).

15. Verfahren nach Anspruch 14, ferner umfassend:
Verringern der Drehzahl des Motors (250), wenn der Strompegel der Batterieeinheit (280) über einen ersten Schwellenwert ansteigt; und
Erhöhen der Drehzahl des Motors (250), wenn der Strompegel der Batterieeinheit (280) unter einen zweiten Schwellenwert abfällt;
wobei der zweite Schwellenwert kleiner oder gleich dem ersten Schwellenwert ist.

## Revendications

1. Système de puissance pour une unité de réfrigération de transport (200) d'un véhicule, le système comprenant :
une unité de batterie (280) configurée pour alimenter en puissance électrique un système de réfrigération de l'unité de réfrigération de transport (200) ;
un générateur (240) configuré pour charger l'unité de batterie (280) ;
un moteur (250) configuré pour entraîner le générateur (240) ; et
un système de commande (220) configuré pour :
recevoir ou déterminer un itinéraire de véhicule depuis un emplacement actuel du véhicule jusqu'à une destination du véhicule ;
prédire comment un niveau de puissance de l'unité de batterie (280) changera sur l'itinéraire de véhicule ;
**caractérisé en ce que** ledit système de commande (220) est en outre configuré pour commander un état opérationnel du moteur (250) en fonction de l'itinéraire de véhicule et du niveau de puissance prédit.

2. Système selon la revendication 1, dans lequel le système de commande (220) est configuré pour :
commander l'état opérationnel du moteur (250) de telle sorte que le niveau de puissance de l'unité de batterie (280) est inférieur à une première valeur prédéterminée lorsque le véhicule atteint sa destination.

3. Système selon la revendication 1 ou 2, dans lequel le système de commande (220) est configuré pour :
déterminer que l'itinéraire du véhicule traverse une région dans laquelle le moteur (250) ne doit pas être mis en opération ; et
commander l'état opérationnel du moteur (250) de telle sorte que le niveau de puissance de l'unité de batterie (280) est supérieur à une seconde valeur prédéterminée lorsque le véhicule entre dans la région dans laquelle le moteur (250) ne doit pas être mis en opération.

4. Système selon la revendication 3, dans lequel la région dans laquelle le moteur (250) ne doit pas être mis en opération est une zone à faibles émissions ou une zone à faible bruit.

5. Système selon une quelconque revendication précédente, comprenant :
un système de détermination de position pour déterminer l'emplacement actuel du véhicule.

6. Unité de réfrigération de transport (200) d'un véhicule, comprenant :
un système de réfrigération configuré pour refroidir un compartiment du véhicule ; et
un système de puissance selon une quelconque revendication précédente.

7. Procédé d'alimentation en puissance d'une unité de réfrigération de transport (200) d'un véhicule, dans lequel l'unité de réfrigération de transport (200) comprend un système de réfrigération, une unité de batterie (280) pour alimenter en puissance le système de réfrigération, un générateur (240) pour charger l'unité de batterie (280), et un moteur (250) pour entraîner le générateur (240), le procédé comprenant :
la détermination d'un itinéraire de véhicule depuis un emplacement actuel du véhicule jusqu'à une destination du véhicule ;
la prédiction de la manière dont un niveau de puissance de l'unité de batterie (280) changera sur l'itinéraire de véhicule ; **caractérisé en ce que** le procédé comprend en outre : la commande d'un état opérationnel du moteur (250) en fonction de l'itinéraire de véhicule et du niveau de puissance prédit.

8. Procédé selon la revendication 7, comprenant :
la commande de l'état opérationnel du moteur (250) de telle sorte que le niveau de puissance de l'unité de batterie (280) est inférieur à une première valeur prédéterminée lorsque le véhicule atteint sa destination.

9. Procédé selon la revendication 7 ou 8, comprenant :
la détermination que l'itinéraire du véhicule traverse une région dans laquelle le moteur (250) ne doit pas être mis en opération ; et
la commande de l'état opérationnel du moteur (250) de telle sorte que le niveau de puissance de l'unité de batterie (280) est supérieur à une seconde valeur prédéterminée lorsque le véhicule entre dans la région dans laquelle le moteur (250) ne doit pas être mis en opération.

10. Procédé selon la revendication 9, dans lequel la région dans laquelle le moteur (250) ne doit pas être mis en opération est une zone à faibles émissions ou une zone à faible bruit.

11. Système de puissance pour une unité de réfrigération de transport (200), le système comprenant :
une unité de batterie (280) configurée pour alimenter en puissance électrique un système de réfrigération de l'unité de réfrigération de transport (200) ;
un générateur (240) configuré pour charger l'unité de batterie (280) ;
un moteur (250) configuré pour entraîner le générateur (240) ; et
un système de commande (220) configuré pour :
surveiller un niveau de puissance de l'unité de batterie (280) ;
commuter le moteur entre un état opérationnel et un état non opérationnel (250) en fonction du niveau de puissance de l'unité de batterie (280) ;
**caractérisé en ce que** ledit système de commande (220) est en outre configuré pour : lorsque le moteur (250) a été commuté vers l'état opérationnel, changer en outre une vitesse du moteur (250) en fonction du niveau de puissance de l'unité de batterie (280) .

12. Système selon la revendication 11, dans lequel le système de commande (220) est configuré pour :
diminuer la vitesse du moteur (250) lorsque le niveau de puissance de l'unité de batterie (280) augmente au-delà d'un premier seuil ; et
augmenter la vitesse du moteur (250) lorsque le niveau de puissance de l'unité de batterie (280) diminue en dessous d'un second seuil ;
dans lequel le second seuil est inférieur ou égal au premier seuil.

13. Unité de réfrigération de transport (200) d'un véhicule, comprenant :
un système de réfrigération configuré pour refroidir un compartiment du véhicule ; et
un système de puissance selon la revendication 11 ou 12.

14. Procédé d'alimentation en puissance d'une unité de réfrigération de transport (200), dans lequel l'unité de réfrigération de transport (200) comprend un système de réfrigération, une unité de batterie (280) pour alimenter en puissance le système de réfrigération, un générateur (240) pour charger l'unité de batterie (280), et un moteur (250) pour entraîner le générateur (240), le procédé comprenant :
la surveillance d'un niveau de puissance de l'unité de batterie (280) ;
la commutation du moteur entre un état opérationnel et un état non opérationnel (250) en fonction du niveau de puissance de l'unité de batterie (280) ; **caractérisé en ce que** ledit procédé comprend en outre : lorsque le moteur (250) a été commuté vers l'état opérationnel, le changement en outre d'une vitesse du moteur (250) en fonction du niveau de puissance de l'unité de batterie (280).

15. Procédé selon la revendication 14, comprenant en outre :
la diminution de la vitesse du moteur (250) lorsque le niveau de puissance de l'unité de batterie (280) augmente au-delà d'un premier seuil ; et
l'augmentation de la vitesse du moteur (250) lorsque le niveau de puissance de l'unité de batterie (280) diminue en dessous d'un second seuil ;
dans lequel le second seuil est inférieur ou égal au premier seuil.
